# FASCICULE DE BREVET EUROPEEN

(11) **EP 3 670 249 B1**
(45) Date de publication et mention de la délivrance du brevet: **20.07.2022**
(21) Numéro de dépôt: 19217861.4
(22) Date de dépôt: 19.12.2019
(51) Int. Cl.: B60N 2/015, B61D 17/10, B61D 33/00

(54) **VÉHICULE FERROVIAIRE COMPORTANT UNE PLATEFORME HORIZONTALE COMPORTANT UNE PLURALITÉ D' ORGANES DE FIXATION DE MODULES DE SIÈGE**
SCHIENENFAHRZEUG, DAS EINE HORIZONTALE PLATTFORM MIT EINER VIELZAHL VON BEFESTIGUNGSORGANEN FÜR SITZMODULE UMFASST
RAILWAY VEHICLE COMPRISING A HORIZONTAL PLATFORM COMPRISING A PLURALITY OF ELEMENTS FOR ATTACHING SEAT MODULES

(30) Priorité: 21.12.2018 FR 1873774
(43) Date de publication de la demande: 24.06.2020
(73) Titulaire: SNCF Voyageurs, 93200 Saint-Denis (FR)
(72) Inventeur: GOERES, David, 72000 LE MANS (FR); FEGER, Etienne, 72530 YVRE L'EVEQUE (FR)
(74) Mandataire: Argyma

(56) Documents cités:
- WO-A1-99/25601
- DE-A1- 19 633 032
- DE-A1-102004 046 070

## Description

### DOMAINE TECHNIQUE DE L'INVENTION

La présente invention concerne le domaine des véhicules ferroviaires pour le transport de voyageurs, en particulier, la fixation des sièges dans un train ou un tramway.

### ETAT DE LA TECHNIQUE

De manière classique, un matériel roulant ferroviaire pour le transport de voyageurs comporte une pluralité de véhicules ferroviaires reliés les uns aux autres. Chaque véhicule ferroviaire comprend une plateforme horizontale sur laquelle est montée une pluralité de sièges destinés au confort des voyageurs.

En pratique, un siège est fixé verticalement à une plateforme horizontale du châssis structural d'un véhicule ferroviaire, désigné également « caisse » ou « chaudron ». De manière connue, un siège n'est pas fixé directement au châssis structural mais indirectement par l'intermédiaire d'un organe de support de siège qui est solidarisé audit châssis structural et sur lequel peut se fixer le siège.

De manière connue, la plateforme horizontale comporte des inserts et chaque organe de support de siège est configuré pour être solidarisé aux inserts par insertion de vis selon une direction verticale. Les inserts sont intégrés dans la plateforme horizontale au lieu de montage des sièges. En pratique, pour un véhicule ferroviaire s'étendant longitudinalement selon un axe X, les inserts d'une même ligne sont espacés d'une distance de l'ordre de 60cm, ce qui correspond au pas d'une rangée de sièges.

Lors de la mise en service d'un véhicule ferroviaire, les sièges sont disposés selon une configuration initiale. Par exemple, les sièges peuvent être orientés dans le même sens, en vis à vis, regroupés en rangées parallèles ou en carré. La configuration dépend en particulier de la classe du véhicule. Aussi, un véhicule ayant une disposition du type « première classe » comporte moins de sièges qu'un véhicule ayant une disposition du type « deuxième classe ».

Lors de la rénovation d'un véhicule ferroviaire, il est généralement nécessaire de disposer les sièges selon une nouvelle configuration qui est différente de la configuration initiale. Aussi, il est nécessaire pour les opérateurs de retirer les sièges et de modifier la position des organes de support de siège fixés à la plateforme horizontale.

La modification de la position des organes de support de siège présente de nombreux inconvénients. Tout d'abord, il est nécessaire de retirer les éléments de garnissage de la plateforme horizontale afin de découvrir les inserts. Ensuite, il est nécessaire de réaliser de nouveaux perçages dans la plateforme horizontale afin de monter des inserts aux positions désirées. Enfin, il est nécessaire d'adapter et de remettre en place les éléments de garnissage. De telles étapes sont longues et complexes à mettre en œuvre. La réalisation d'orifices pour la mise en place d'inserts dans un châssis structural en aluminium est délicate étant donné qu'un perçage non conforme (précision insuffisante, mauvais alignement, etc.) ne peut pas être rattrapé. En effet, il n'est pas possible de réaliser un nouveau perçage à proximité du perçage non-conforme étant donné que cela fragiliserait de manière excessive la résistance mécanique locale dudit châssis structural. Lors de la rénovation, le risque pour un opérateur de réaliser un perçage non-conforme est élevé compte tenu du nombre d'orifices à réaliser.

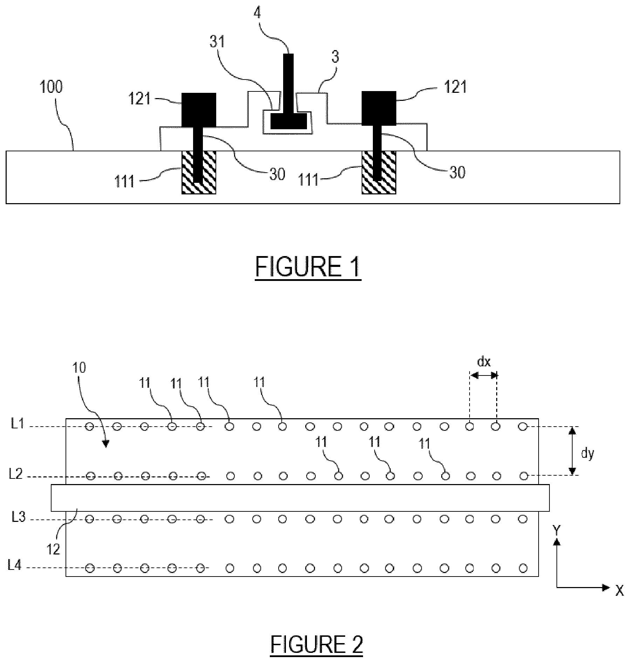

Afin d'éliminer ces inconvénients, en référence à la figure 1, il a été proposé de fixer un rail d'interface 3 à la plateforme horizontale 100 du véhicule ferroviaire. Le rail d'interface 3 comporte des ouvertures de fixation 30 qui sont alignées avec les inserts 111 montés dans la plateforme horizontale 100 de manière à permettre sa solidarisation aux moyens de vis de fixation 121. Le rail d'interface 3 comporte une goulotte supérieure 31 dans laquelle peut être glissée un pied d'un organe de support de siège 4. Ainsi, le rail d'interface 3 permet de définir une pluralité de positions longitudinales continues selon l'axe X selon lequel s'étend la plateforme horizontale 100. Il est ainsi aisé de modifier la disposition des sièges, notamment, le pas entre deux sièges.

Un tel rail d'interface 3 présente néanmoins des inconvénients. En effet, le rail d'interface 3 est en saillie verticale de la plateforme horizontale 100 et forme un obstacle pour les voyageurs qui peuvent trébucher en accédant aux sièges. En outre, un tel rail d'interface 3 est inesthétique et nécessite de prévoir un cache de couverture pour masquer son aspect mais également le protéger à l'encontre de la poussière. Cet organe de couverture demeure visible et n'est pas réalisé dans la même matière que le revêtement couvrant la plateforme horizontale, ce qui affecte l'aspect esthétique. Enfin, l'ajout de rails d'interface 3 augmente de manière importante le coût de montage des sièges dans un véhicule ferroviaire.

Un des objectifs de la présente demande de brevet est de proposer un nouveau système de montage de sièges dans un véhicule de transport ferroviaire permettant un montage de sièges de manière pratique selon différents pas, tout en ne formant pas d'obstacle pour les voyageurs.

De manière incidente, on connaît dans l'art antérieur par la demande de brevet DE19633032 un procédé de fixation d'éléments d'aménagement de véhicules automobiles dans un plancher creux dudit véhicule. Un tel enseignement n'est pas transposable directement à un véhicule ferroviaire.

### PRESENTATION DE L'INVENTION

A cet effet, l'invention concerne un véhicule ferroviaire de transport de voyageurs comportant une plateforme horizontale s'étendant axialement selon un axe, une pluralité de modules de siège alignés selon l'axe X, chaque module de siège comportant au moins un organe de montage destiné à être fixé à la plateforme horizontale.

L'invention est remarquable en ce que la plateforme horizontale comporte une pluralité d'organes de fixation, les organes de fixation étant alignés selon au moins une ligne s'étendant selon un axe parallèle à l'axe X de la plateforme horizontale, deux organes de fixation adjacents d'une même ligne étant espacés d'une distance inférieure ou égale à 20cm de manière à définir une pluralité de positions longitudinales de fixation des modules de siège.

Grâce à l'invention, les organes de fixation permettent avantageusement de positionner des modules de siège selon différents pas d'écartement de manière pratique. Une telle distance permet d'optimiser le nombre d'organes de fixation par rapport aux contraintes techniques relatives aux différents écartements des modules de siège dans un véhicule ferroviaire. En outre, l'utilisation d'organes de fixation appartenant à la plateforme horizontale évite de former des obstacles à la circulation des voyageurs lorsqu'ils ne sont pas utilisés. La sécurité est ainsi améliorée. Enfin, le coût d'une pluralité d'organes de fixation reste faible par comparaison au coût d'un rail continu.

De préférence les organes de fixation sont alignés selon au moins deux lignes s'étendant chacune selon un axe parallèle à l'axe X de la plateforme horizontale. Ainsi, cela permet de fixer un module de siège de manière stable entre les deux lignes, chaque extrémité du module de siège étant avantageusement fixé à une des lignes.

De préférence encore, les organes de fixation sont alignés selon au moins quatre lignes s'étendant chacune selon un axe parallèle à l'axe X de la plateforme horizontale. Cela permet avantageusement de monter deux alignements de modules de sièges écartés par un couloir central.

De manière préférée, deux organes de fixation adjacents d'une même ligne sont espacés d'une distance comprise entre 10cm et 20cm. De préférence, deux organes de fixation adjacents d'une même ligne sont espacés d'une distance comprise entre 13cm et 15cm. Une telle distance permet d'optimiser le nombre d'organes de fixation tout en permettant un réglage continu du pas entre deux modules de siège.

Selon l'invention, chaque organe de montage comporte une ouverture allongée dont la longueur selon l'axe X est supérieure ou égale à 18cm, de préférence, comprise entre 18cm et 52cm, de préférence encore, comprise entre 30 et 35cm. Une telle ouverture allongée permet, d'une part, de coopérer avec au moins deux organes de fixation pour permettre un montage stable et robuste et, d'autre part, de permettre un réglage continu et pratique du pas entre deux modules de siège.

De préférence, l'ouverture allongée est continue selon sa longueur offrant une liberté de réglage importante. De manière alternative, l'ouverture allongée est discontinue selon sa longueur et comporte une première ouverture élémentaire et une deuxième ouverture élémentaire qui sont alignées selon l'axe X. La présence de deux ouvertures élémentaires distinctes permet de renforcer la structure et d'éviter une déformation de l'ouverture allongée sur sa longueur du fait des vibrations et des chocs.

De préférence, l'organe de montage d'un module de siège est relié à un organe de fixation par un organe de liaison, de préférence, par vissage. Ainsi, l'organe de montage est pris en sandwich entre l'organe de liaison et la plateforme horizontale.

Selon un aspect, un organe d'interface est positionné entre l'organe de montage et l'organe de liaison de manière à répartir les efforts de l'organe de liaison sur l'organe de montage. Le risque de retrait involontaire de l'organe de liaison hors de l'organe de montage est ainsi réduit.

L'invention concerne également un procédé de modification de la position d'au moins un module de siège dans un véhicule ferroviaire tel que présenté précédemment, un module de siège, situé à une première position, comportant au moins un organe de montage relié à la plateforme horizontale par un couple d'organes de liaison coopérant avec un couple d'organes de fixation de la plateforme horizontale, le procédé comportant une étape de retrait des organes de liaison du couple d'organes de fixation, une étape de déplacement longitudinal selon l'axe X du module de siège à une deuxième position et une étape mise en place d'organes de liaison dans l'organe de montage avec un autre couple d'organes de fixation dans la deuxième position.

La modification de la position d'un module de siège est rapide et pratique à mettre en oeuvre par un opérateur compte tenu du nombre et de la fréquence des organes de fixation dans la plateforme horizontale.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 représente de manière schématique un organe de siège fixé à une plateforme horizontale par un rail selon l'art antérieur,
La figure 2 représente de manière schématique une plateforme horizontale comportant quatre lignes d'organes de fixation,
La figure 3a représente une première forme de réalisation d'un organe de montage d'un module de siège,
La figure 3b illustre un déplacement de l'organe de montage de la figure 3a,
La figure 3c représente une deuxième forme de réalisation d'un organe de montage d'un module de siège,
La figure 3d représente une troisième forme de réalisation d'un organe de montage d'un module de siège,
La figure 4a représente le montage d'un module de siège selon la première forme de réalisation à la plateforme horizontale,
La figure 4b]représente le montage d'un module de siège selon la troisième forme de réalisation à la plateforme horizontale,
La figure 5a représente deux modules de siège avec un premier pas d'écartement P1,
La figure 5b représente deux modules de siège avec un deuxième pas d'écartement P2 et
La figure 6 représente un organe d'interface monté entre un organe de liaison et un organe de montage d'un module de siège.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention va être présentée pour un véhicule ferroviaire de transport de voyageurs, en particulier, un train ou un tramway.

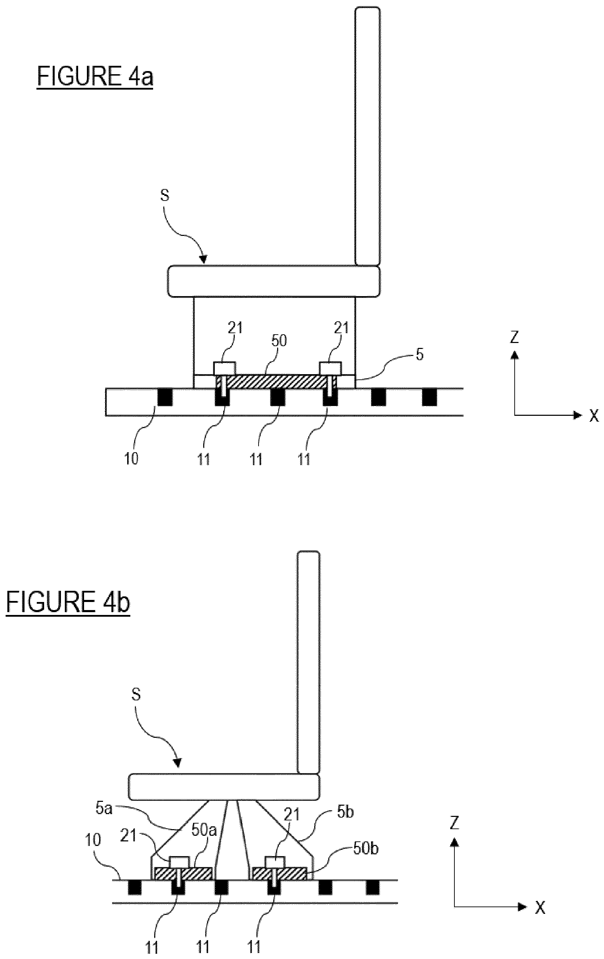

De manière connue, en référence à la figure 2, le véhicule comporte une plateforme horizontale 10 destinée à recevoir des modules de siège S pour voyageurs (voir figures 4a, 4b). La plateforme horizontale 10 s'étend longitudinalement selon sa longueur selon un axe X et latéralement selon sa largeur selon un axe Y. Par la suite, on définit un repère orthogonal (X, Y, Z) dans lequel l'axe Z s'étend verticalement.

Par module de siège S, on entend aussi bien un siège individuel qu'un ensemble de plusieurs sièges. Un module de siège S forme l'unité structurelle qui doit être fixé à la plateforme horizontale 10. Chaque module de siège S comporte au moins un organe de montage 5 destiné à être fixé à la plateforme horizontale 10.

Dans cet exemple de réalisation, la plateforme horizontale 10 est adaptée pour recevoir des modules de sièges S répartis de part et d'autre d'un couloir central 12 en deux alignements : un alignement de droite et un alignement de gauche. Chaque alignement s'étend selon la longueur de la plateforme horizontale 10. Chaque alignement comporte une pluralité de modules de siège S, deux modules de siège S adjacents étant écartés par un pas d'écartement P1, P2 comme cela sera présenté par la suite.

Selon l'invention, la plateforme horizontale 10 comporte une pluralité d'organes de fixation 11, les organes de fixation 11 étant alignés selon au moins une ligne s'étendant selon un axe parallèle à l'axe X de la plateforme horizontale 1, deux organes de fixation 11 adjacents d'une même ligne étant espacés d'une distance inférieure ou égale à 20cm de manière à définir une pluralité de positions longitudinales de fixation des modules de siège S.

Dans cette forme de réalisation, en référence à la figure 2, la plateforme horizontale 10 comporte des organes de fixation 11 qui sont alignés selon quatre lignes L1-L4, chaque ligne L1-L4 s'étendant selon un axe parallèle à l'axe X de la plateforme horizontale 10. Les lignes L1-L2 permettent avantageusement le montage des modules de siège S de l'alignement de gauche tandis que les lignes L3-L4 permettent le montage des modules de siège S de l'alignement de droite. Autrement dit, chaque alignement de modules de siège S est associé à deux lignes d'organes de fixation 11 afin de permettre une fixation stable et équilibrée. De préférence, deux lignes L1-L2 ; L3-L4 pour fixer un même module de siège S sont écartées d'une distance dy comprise entre 40cm et 200cm.

Selon l'invention, deux organes de fixation 11 adjacents d'une même ligne L1-L4 sont espacés d'une distance dx inférieure ou égale à 20cm de manière à définir une pluralité de positions longitudinales de fixation des modules de siège S. En effet, comme cela sera présenté par la suite, un module de siège S est fixé en deux points espacés longitudinalement d'une distance de l'ordre de 30cm. Aussi, un pas dx de l'ordre de 20cm permet un montage d'un module de siège S avec les organes de fixation 11 à des positions longitudinales différentes.

Dans cet exemple de réalisation, en référence à la figure 2, deux organes de fixation 11 adjacents d'une même ligne L1-L4 sont espacés d'une distance dx comprise entre 10cm et 20cm, de préférence, entre 13cm et 15cm. Une telle distance dx assure un compromis entre flexibilité de montage (distance faible) et un coût réduit (distance importante).

De manière préférée, les organes de fixation 11 de la plateforme horizontale 10 se présentent sous la forme d'inserts métalliques, en particulier, taraudés. De préférence, les organes de fixation 11 sont intégrés dans la plateforme horizontale 10 de manière à ne pas s'étendre en saillie verticale. De tels organes de fixation 11 permettent ainsi d'éviter de former un obstacle pour la circulation des voyageurs ou la pose d'un revêtement au sol lorsqu'ils ne sont pas utilisés pour fixer un module de siège S.

Afin de permettre de définir une pluralité de positions de montage définies de manière continue selon la direction longitudinale X, le module de siège S possède ainsi un ou plusieurs organes de montage 5 de forme adaptée.

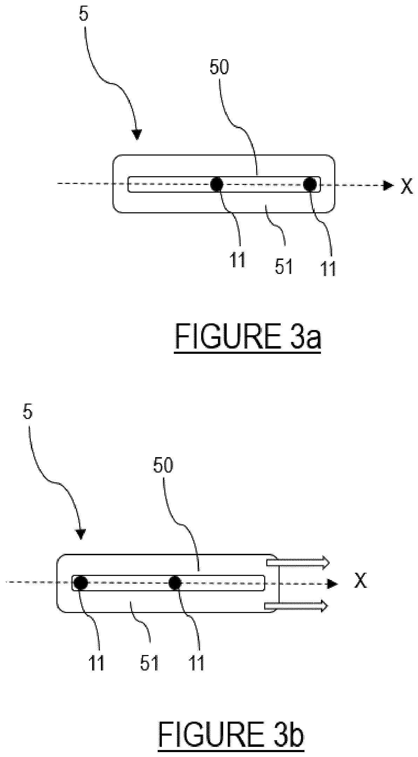

En référence aux figures 3a-3b, l'organe de montage 5 comporte une ouverture allongée 50 dont la longueur selon l'axe X est supérieure ou égale à 18cm, de préférence comprise entre 18cm et 52cm, de préférence, comprise entre 30 et 35cm, de préférence, comprise entre 30 et 32cm. Une telle ouverture allongée 50 permet avantageusement de correspondre avec au moins deux organes de fixation 11 de manière simultanée. En outre, en référence à la figure 3b, une telle fixation autorise un jeu de montage autour des deux organes de fixation 11, ce qui permet de définir une pluralité de positions de montage de manière continue selon la direction longitudinale X. L'organe de montage 5 comporte en outre une surface supérieure périphérique 51 formée autour de l'ouverture allongée 50.

Comme cela sera présenté aux figures 4A, 4B, deux organes de liaison 21 sont montés dans l'ouverture allongée 50 pour correspondre avec des organes de fixation 11. De préférence, les organes de liaison 21 se présentent sous la forme de vis de liaison de manière à venir serrer l'organe de montage 5 sur la plateforme horizontale 10.

De préférence, chaque organe de liaison 21 comporte un pied, adapté pour coopérer avec un organe de fixation 11, et une tête configurée pour exercer un effort vertical sur l'organe de montage 5, en particulier, sur la surface supérieure périphérique 51.

En référence à la figure 3a, selon une première forme de réalisation de l'organe de montage 5, l'ouverture allongée 50 est continue selon l'axe X, ce qui permet un réglage continu selon la direction longitudinale X. De manière préférée, l'ouverture allongée 50 est oblongue de manière à limiter les contraintes mécaniques. Comme illustré à la figure 3b, du fait de la forme allongée de l'ouverture 50, l'organe de montage 5 peut être positionné avec un jeu longitudinal par rapport aux organes de fixation 11 de la plateforme horizontale 10.

A titre d'exemple, en référence à la figure 4a, il est représenté un module de siège S comportant à chacune de ses extrémité latérales un organe de montage 5 comportant une ouverture allongée continue 50 comme illustré à la figure 3a. Deux organes de liaison 21 sont montés dans les organes de fixation 11 de la plateforme horizontale 10 de manière à fixer le module de siège S à la plateforme horizontale 10.

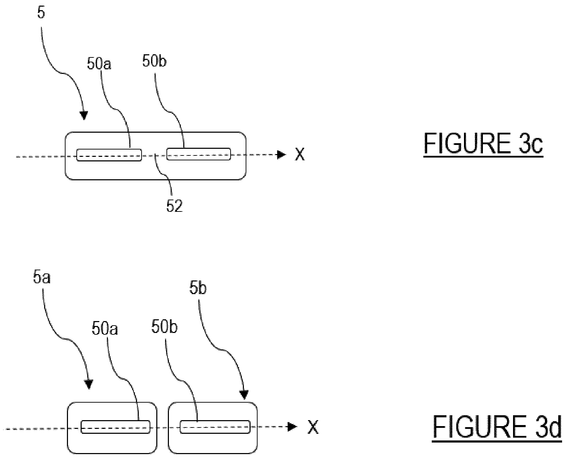

En référence à la figure 3c, selon une deuxième forme de réalisation de l'organe de montage 5, l'ouverture allongée 50 est discontinue et comporte deux ouvertures élémentaires distinctes 50a, 50b alignées selon l'axe X. Ainsi, chaque ouverture élémentaire 50a, 50b permet de correspondre à un organe de fixation 11 pour permettre le réglage. Les deux ouvertures élémentaires 50a, 50b sont séparées par un pont de matière 52 qui permet de renforcer l'ouverture allongée 50 à l'encontre des vibrations et chocs survenant dans le domaine ferroviaire. Le risque de démontage accidentel est ainsi réduit. De manière préférée, chaque ouverture élémentaire 50a, 50b est oblongue de manière à limiter les contraintes mécaniques.

En référence à la figure 3d, selon une troisième forme de réalisation, l'organe de montage 5 comporte deux organes de montage élémentaires 5a, 5b, chacun comportant une ouverture élémentaire 50a, 50b qui sont alignées selon l'axe X de manière à former une ouverture allongée 50. L'utilisation de deux organes de montage élémentaires 5a, 5b permet avantageusement de réduire la masse par comparaison à un unique organe de montage 5 comme présenté à la figure 3b.

A titre d'exemple, en référence à la figure 4b, il est représenté un module de siège S comportant à chacune de ses extrémité latérales deux organes de montage 5a, 5b comportant chacun une ouverture élémentaire 50a, 50b comme illustré à la figure 3d. Deux organes de liaison 21 sont montés dans les organes de fixation 11 débouchant respectivement dans les ouvertures élémentaires 50a, 50b de manière à fixer le module de siège S à la plateforme horizontale 10.

Il va dorénavant être présenté un exemple de mise en œuvre d'un procédé de modification de la configuration de modules de siège sur une plateforme horizontale 10 dans un véhicule ferroviaire.

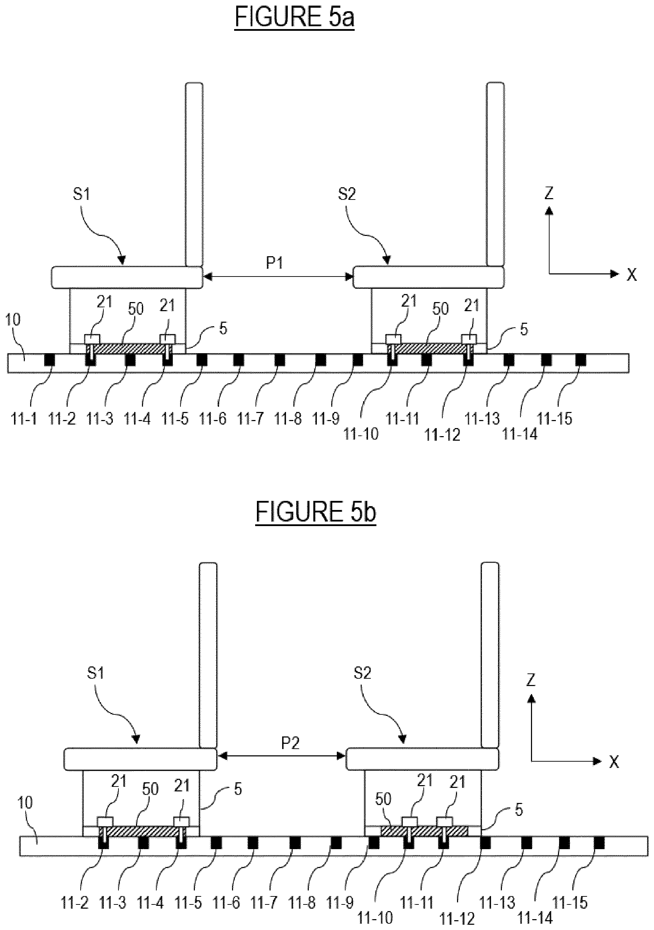

En référence à la figure 5a, il est représenté un premier module de siège S1 et un deuxième module de siège S2 qui sont adjacents et appartiennent à un même alignement. Les deux modules de siège S1, S2 sont écartés d'un premier pas P1 qui est de l'ordre de 60 cm, ce qui correspond à une configuration du type première classe. Les modules de siège S1, S2 sont fixés à la plateforme horizontale 10 par vissage d'organes de liaison 21 à des organes de fixation 11 de la plateforme horizontale 10. En particulier, dans cet exemple, les organes de fixation 11-2, 11-3, 11-4 sont en regard de l'ouverture allongée 50 du premier module de siège S1 et des organes de liaison 21 sont vissés dans les organes de fixation 11-2 et 11-4. De même, les organes de fixation 11-10, 11-11, 11-12 sont en regard de l'ouverture allongée 50 du deuxième module de siège S2 et des organes de liaison 21 sont vissés dans les organes de fixation 11-10 et 11-12.

Dans cet exemple de mise en œuvre, l'écartement entre les deux modules de siège S1, S2 est modifié pour correspondre à une configuration du type deuxième classe avec un deuxième pas P2 qui est de l'ordre de 45 cm comme illustré à la figure 5b. Grâce à l'invention, une telle modification est simple et rapide, en effet, la fixation du premier module de siège S1 reste inchangée. Seuls les organes de liaison 21 du deuxième module de siège S2 sont dévissés pour permettre un rapprochement des modules de sièges S1, S2 afin que seuls les organes de fixation 11-10, 11-11 soient en regard de l'ouverture allongée 50 du deuxième module de siège S2 comme illustré à la figure 5b. Des organes de liaison 21 sont alors vissés dans les organes de fixation 11-10 et 11-11. De manière avantageuse, une autre valeur de pas longitudinal peut être aisément obtenue étant donné qu'il existe un jeu longitudinal de montage du deuxième module de siège S2 du fait de l'ouverture allongée 50. Ainsi, grâce à l'invention, on peut définir toute valeur de pas entre deux modules de siège S1, S2. Il n'est plus nécessaire de modifier la plateforme horizontale 10 en cas de changement de configuration. En outre, tout en ayant un coût réduit, la présente invention ne présente aucun obstacle pour la circulation des voyageurs.

Comme présenté précédemment, chaque organe de liaison 21 comporte un pied, adapté pour coopérer avec un organe de fixation 11, et une tête configurée pour exercer un effort vertical sur l'organe de montage 5, en particulier, la surface supérieure périphérique 51. Afin d'éviter que la tête de l'organe de liaison 21 ne passe dans l'ouverture allongée 50 lors d'un choc ou du fait des vibrations, il est proposé de positionner, de manière optionnelle, un organe d'interface.

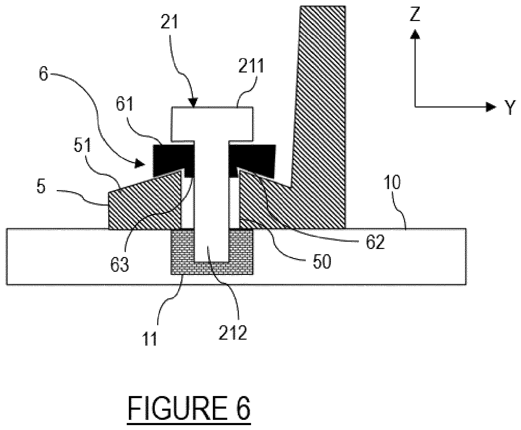

Comme illustré à la figure 6, un organe d'interface 6 est positionné entre la surface supérieure périphérique 51 de l'organe de montage 5 et la tête 211 de l'organe de liaison 21, le pied 212 de l'organe de liaison 21 s'étendant dans l'ouverture 50 et étant vissé dans l'organe de fixation 11. Ainsi, l'organe d'interface 6 permet de répartir les efforts de compression sur une partie plus importante de la surface supérieure périphérique 51.

De manière préférée, comme illustré à la figure 6, l'organe d'interface 6 comporte une surface supérieure 61 qui est horizontale de manière à transmettre de manière optimale les efforts de serrage de l'organe de liaison 21. De plus, l'organe d'interface 6 comporte une surface inférieure 62 qui est concave de manière à coopérer, par complémentarité de formes avec la surface supérieure périphérique 51 de l'organe de montage 5 qui est de préférence convexe. Ainsi, de manière avantageuse, la coopération des surfaces permet un centrage naturel de l'organe d'interface 6 sur la surface supérieure périphérique 51 ainsi qu'une transmission optimale des efforts. De préférence, l'organe d'interface 6 comporte une portion en saillie 63 dans l'ouverture allongée 50 de manière à assurer un positionnement précis. Grâce à l'organe d'interface 6, la résistance mécanique est améliorée et le risque de retrait involontaire est éliminé.

## Revendications

1. Véhicule ferroviaire de transport de voyageurs comportant une plateforme horizontale (10) s'étendant axialement selon un axe X, une pluralité de modules de siège (S) alignés selon l'axe X, chaque module de siège (S) comportant au moins un organe de montage (5) destiné à être fixé à la plateforme horizontale (10), véhicule **caractérisé par le fait que** la plateforme horizontale (10) comporte une pluralité d'organes de fixation (11), les organes de fixation (11) étant alignés selon au moins une ligne (L1-L4) s'étendant selon un axe parallèle à l'axe X de la plateforme horizontale (10), deux organes de fixation (11) adjacents d'une même ligne (L1-L4) étant espacés d'une distance inférieure ou égale à 20cm de manière à définir une pluralité de positions longitudinales de fixation des modules de siège (S), chaque organe de montage (5) comportant une ouverture allongée (50) dont la longueur selon l'axe X est supérieure ou égale à 18cm.

2. Véhicule selon la revendication 1, dans lequel les organes de fixation (11) sont alignés selon au moins deux lignes (L1-L4) s'étendant chacune selon un axe parallèle à l'axe X de la plateforme horizontale (10).

3. Véhicule selon l'une des revendications 1 à 2, dans lequel les organes de fixation (11) sont alignés selon au moins quatre lignes (L1-L4) s'étendant chacune selon un axe parallèle à l'axe X de la plateforme horizontale (10).

4. Véhicule selon l'une des revendications 1 à 3, dans lequel deux organes de fixation (11) adjacents d'une même ligne (L1-L4) sont espacés d'une distance comprise entre 10cm et 20cm, de préférence, entre 13cm et 15cm.

5. Véhicule selon l'une des revendications 1 à 4, dans lequel chaque organe de montage (5) comporte une ouverture allongée (50) dont la longueur selon l'axe X est comprise entre 18cm et 52cm, de préférence, comprise entre 30cm et 35cm.

6. Véhicule selon la revendication 5, dans lequel l'ouverture allongée (50) est continue selon sa longueur.

7. Véhicule selon la revendication 5, dans lequel l'ouverture allongée (50) est discontinue selon sa longueur et comporte une première ouverture élémentaire (50a) et une deuxième ouverture élémentaire (50b) qui sont alignées selon l'axe X.

8. Véhicule selon l'une des revendications 1 à 7, dans lequel l'organe de montage (5) d'un module de siège (S) est relié à un organe de fixation (11) par un organe de liaison (21), de préférence, par vissage.

9. Véhicule selon la revendication 8, dans lequel un organe d'interface (6) est positionné entre l'organe de montage (5) et l'organe de liaison (21) de manière à répartir les efforts de l'organe de liaison (21) sur l'organe de montage (5).

10. Procédé de modification de la position d'au moins un module de siège (S) dans un véhicule ferroviaire selon l'une des revendications 8 à 9, un module de siège (S), situé à une première position, comportant au moins un organe de montage (5) relié à la plateforme horizontale (10) par un couple d'organes de liaison (21) coopérant avec un couple d'organes de fixation (11) de la plateforme horizontale (10), le procédé comportant une étape de retrait des organes de liaison (21) du couple d'organes de fixation (11), une étape de déplacement longitudinal selon l'axe X du module de siège (S) à une deuxième position et une étape mise en place d'organes de liaison (21) dans l'organe de montage (5) avec un autre couple d'organes de fixation (11) dans la deuxième position.

## Patentansprüche

1. Schienenfahrzeug zum Transport von Reisenden, aufweisend eine horizontale Plattform (10), die sich axial gemäß einer Achse X erstreckt, eine Vielzahl von gemäß der Achse X ausgerichteten Sitzmodulen (S), wobei jedes Sitzmodul (S) mindestens ein Montageorgan (5) aufweist, das bestimmt ist, an der horizontalen Plattform (10) befestigt zu sein, wobei das Fahrzeug **dadurch gekennzeichnet ist, dass** die horizontale Plattform (10) eine Vielzahl von Befestigungsorganen (11) aufweist, wobei die Befestigungsorgane (11) gemäß mindestens einer Linie (L1-L4) ausgerichtet sind, die sich gemäß einer Achse erstreckt, die parallel zur Achse X der horizontalen Plattform (10) ist, wobei zwei benachbarte Befestigungsorgane (11) derselben Linie (L1-L4) in einem Abstand von weniger oder gleich 20 cm derart beabstandet sind, dass eine Vielzahl von Längs-Befestigungspositionen der Sitzmodule (S) definiert wird, wobei jedes Montageorgan (5) eine längliche Öffnung (50) aufweist, deren Länge gemäß der Achse X größer oder gleich 18 cm ist.

2. Fahrzeug nach Anspruch 1, wobei die Befestigungsorgane (11) gemäß mindestens zwei Linien (L1-L4) ausgerichtet sind, die sich jeweils gemäß einer Achse erstrecken, die parallel zur Achse X der horizontalen Plattform (10) ist.

3. Fahrzeug nach einem der Ansprüche 1 bis 2, wobei die Befestigungsorgane (11) gemäß mindestens vier Linien (L1-L4) ausgerichtet sind, die sich jeweils gemäß einer Achse erstrecken, die parallel zur Achse X der horizontalen Plattform (10) ist.

4. Fahrzeug nach einem der Ansprüche 1 bis 3, wobei zwei benachbarte Befestigungsorgane (11) derselben Linie (L1-L4) in einem Abstand beabstandet sind, der zwischen 10 cm und 20 cm, vorzugsweise zwischen 13 cm und 15 cm, liegt.

5. Fahrzeug nach einem der Ansprüche 1 bis 4, wobei jedes Montageorgan (5) eine längliche Öffnung (50) aufweist, deren Länge gemäß der Achse X zwischen 18 cm und 52 cm, vorzugsweise zwischen 30 cm und 35 cm, liegt.

6. Fahrzeug nach Anspruch 5, wobei die längliche Öffnung (50) gemäß ihrer Länge kontinuierlich ist.

7. Fahrzeug nach Anspruch 5, wobei die längliche Öffnung (50) gemäß ihrer Länge diskontinuierlich ist und eine erste elementare Öffnung (50a) und eine zweite elementare Öffnung (50b) aufweist, die gemäß der Achse X ausgerichtet sind.

8. Fahrzeug nach einem der Ansprüche 1 bis 7, wobei das Montageorgan (5) eines Sitzmoduls (S) mit einem Befestigungsorgan (11) durch ein Verbindungsorgan (21) verbunden ist, vorzugweise durch Schrauben.

9. Fahrzeug nach Anspruch 8, wobei ein Schnittstellenorgan (6) zwischen dem Montageorgan (5) und dem Verbindungsorgan (21) derart positioniert ist, dass die Kräfte des Verbindungsorgans (21) auf das Montageorgan (5) übertragen werden.

10. Verfahren zur Änderung der Position von mindestens einem Sitzmodul (S) in einem Schienenfahrzeug nach einem der Ansprüche 8 bis 9, wobei ein Sitzmodul (S), das sich an einer ersten Position befindet, mindestens ein Montageorgan (5) aufweist, das mit der horizontalen Plattform (10) durch ein Paar Verbindungsorgane (21) verbunden ist, die mit einem Paar Befestigungsorgane (11) der horizontalen Plattform (10) zusammenwirken, wobei das Verfahren einen Schritt des Entfernens der Verbindungsorgane (21) von dem Paar Befestigungsorgane (11), einen Schritt der Längsverlagerung gemäß der Achse X des Sitzmoduls (S) in eine zweite Position und einen Schritt des Platzierens von Verbindungsorganen (21) in das Montageorgan (5) mit einem anderen Paar Befestigungsorgane (11) in der zweiten Position aufweist.

## Claims

1. A rail vehicle for transporting passengers comprising a horizontal platform (10) axially extending along an axis X,
a plurality of seat modules (S) aligned along axis X, each seat module (S) comprising at least one mounting member (5) for being fastened to the horizontal platform (10), the vehicle being **characterised in that** the horizontal platform (10) comprises a plurality of fastening members (11), the fastening members (11) being aligned along at least one line (L1-L4) extending along an axis parallel to axis X of the horizontal platform (10), two adjacent fastening members (11) of a same line (L1-L4) being spaced apart by a distance lower than or equal to 20cm so as to define a plurality of longitudinal positions for fastening the seat modules (S), each mounting member (5) comprising an elongate opening (50) the length of which along axis X is greater than or equal to 18cm.

2. The vehicle according to claim 1, wherein the fastening members (11) are aligned along at least two lines (L1-L4) each extending along an axis parallel to axis X of the horizontal platform (10).

3. The vehicle according to one of claims 1 to 2, wherein the fastening members (11) are aligned along at least four lines (L1-L4) each extending along an axis parallel to axis X of the horizontal platform (10).

4. The vehicle according to one of claims 1 to 3, wherein two adjacent fastening members (11) of a same line (L1-L4) are spaced apart by a distance of between 10cm and 20cm, preferably between 13cm and 15cm.

5. The vehicle according to one of claims 1 to 4, wherein each mounting member (5) comprises an elongate opening (50) the length of which along axis X is between 18cm and 52cm, preferably between 30cm and 35cm.

6. The vehicle according to claim 5, wherein the elongate opening (50) is continuous along its length.

7. The vehicle according to claim 5, wherein the elongate opening (50) is discontinuous along its length and comprises a first elementary opening (50a) and a second elementary opening (50b) which are aligned along axis X.

8. The vehicle according to one of claims 1 to 7, wherein the mounting member (5) of a seat module (S) is connected to a fastening member (11) by a connecting member (21), preferably by screwing.

9. The vehicle according to claim 8, wherein an interface member (6) is positioned between the mounting member (5) and the connecting member (21) so as to distribute loads from the connecting member (21) onto the mounting member (5).

10. A method for modifying position of at least one seat module (S) in a rail vehicle according to one of claims 8 to 9, a seat module (S), located at a first position, comprising at least one mounting member (5) connected to the horizontal platform (10) by a couple of connecting members (21) cooperating with a couple of fastening members (11) of the horizontal platform (10), the method comprising a step of removing the connecting members (21) from the couple of fastening members (11), a step of longitudinally moving the seat module (S) along axis X to a second position and a step of placing the connecting members (21) in the mounting member (5) with another couple of fastening members (11) into the second position.
